# EUROPEAN PATENT APPLICATION

(11) **EP 3 835 933 A1**
(43) Date of publication of application: **16.06.2021**
(21) Application number: 20177446.0
(22) Date of filing: 29.05.2020
(51) Int. Cl.: G06F 3/0482, G06F 3/0483, G06F 3/0488, G06Q 30/06

(54) **PRODUCT BROWSING METHOD AND APPARATUS, DEVICE AND STORAGE MEDIUM**

(30) Priority: 11.12.2019 CN 201911267161
(71) Applicant: Beijing Xiaomi Mobile Software Co., Ltd., Beijing 100085 (CN)
(72) Inventor: DU, Huitong, Haidian District, Beijing 100085 (CN); ZHOU, Jing, Haidian District, Beijing 100085 (CN); LIU, Xushu, Haidian District, Beijing 100085 (CN)
(74) Representative: Gevers Patents

(57) **Abstract**

The present disclosure discloses a product browsing method and apparatus, a device and a storage medium, and relates to the technical field of computers. The method includes that: a recommendation user interface, on which a product list is displayed, is displayed (210); responsive to a first instruction, a presentation pop-up window of a target product is superimposed over the recommendation user interface (220); and product information of the target product is displayed in the presentation pop-up window (230).

## Description

### TECHNICAL FIELD

The present disclosure generally relates to the technical field of computers, and more particularly, to a product browsing method and apparatus, a device and a storage medium.

### BACKGROUND

Along with constant development of computer technologies, more and more users are inclined to enjoy service of various electronic products on the Internet, for example, reading electronic books and shopping online. Many service providers release massive products on the Internet, and these products are displayed on a recommendation interface in the form of a list.

Typically, when a user is interested in a product on a product recommendation interface, a triggering operation needs to be executed on the product and the user can be redirected from the recommendation interface to a detail presentation interface of the product, where the user may learn more about the product.

Because the detail presentation interface of the product includes too much information, if the product is not required by a user, the user spends too much time browsing and efficiency is low.

### SUMMARY

Embodiments of the present disclosure provide a product browsing method and apparatus, a device and a storage medium, which may be adopted to solve the problem that, since a detail presentation interface of a product includes too much information, if the product is not required by a user, the user spends too much time browsing and efficiency is low. The technical solutions are implemented as follows.

According to an aspect of the present disclosure, a product browsing method is provided, which may include: displaying a recommendation user interface on which a product list is displayed; superimposing a presentation pop-up window of a target product over the recommendation user interface in response to a first instruction; and displaying product information of the target product in the presentation pop-up window.

According to another aspect, a product browsing apparatus is provided, which may include a display module. The display module may be configured to the display module may be configured to display a recommendation user interface on which a product list is displayed, superimpose a presentation pop-up window of a target product over the recommendation user interface in response to a first instruction, and display product information of the target product in the presentation pop-up window.

According to another aspect, there is provided a computer program including instructions for executing the actions of the above product browsing method when said program is executed by a computer.

According to another aspect, there is provided a recording medium readable by a computer and having recorded thereon a computer program including instructions for executing the actions of the above product browsing method.

The technical solutions provided by the embodiments of the present disclosure may at least have the following beneficial effects.

According to the method in the embodiments, the recommendation user interface is displayed, and after the first instruction is acquired, the presentation pop-up window of the target product is superimposed over the recommendation user interface for displaying, such that a user may know more about the target product without redirecting to a detail presentation interface of the target product, related operations are reduced, and product browsing efficiency is improved.

### BRIEF DESCRIPTION OF THE DRAWINGS

In order to describe the technical solutions in the embodiments of the present disclosure more clearly, the accompanying drawings required to be used for descriptions about the embodiments will be simply introduced below. It is apparent that the accompanying drawings described below are only some embodiments of the present disclosure. Those of ordinary skill in the art may further obtain other accompanying drawings according to these accompanying drawings without creative work.
FIG. 1 is a schematic diagram illustrating an application scenario, according to an exemplary embodiment of the present disclosure.
FIG. 2 is a flow chart showing a product browsing method, according to an exemplary embodiment of the present disclosure.
FIG. 3 is a schematic diagram illustrating superimposition of a presentation pop-up window, according to an exemplary embodiment of the present disclosure.
FIG. 4 is a flow chart showing a product browsing method, according to an exemplary embodiment of the present disclosure.
FIG. 5 is a schematic diagram illustrating switching different products for displaying in a presentation pop-up window, according to an exemplary embodiment of the present disclosure.
FIG. 6 is a schematic diagram illustrating displaying of a panoramic product demonstration model in a presentation pop-up window, according to an exemplary embodiment of the present disclosure.
FIG. 7 is a schematic diagram illustrating canceling superimposition of a presentation pop-up window, according to an exemplary embodiment of the present disclosure.
FIG. 8 is a schematic diagram illustrating redirecting to a detail presentation interface of a target product, according to an exemplary embodiment of the present disclosure.
FIG. 9 is a block diagram of a product browsing apparatus, according to an exemplary embodiment of the present disclosure.
FIG. 10 is a structure block diagram of a terminal, according to an exemplary embodiment of the present disclosure.
FIG. 11 is a structure block diagram of a server, according to an exemplary embodiment of the present disclosure.

### DETAILED DESCRIPTION

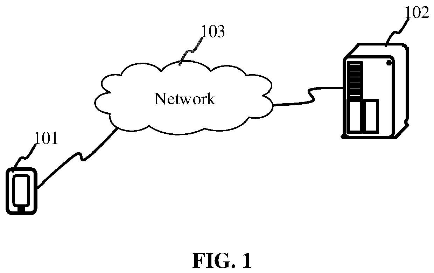

FIG. 1 shows an exemplary application scenario according to an embodiment of the present disclosure that includes a terminal 101 and a server 102. The terminal 101 may be an electronic device, such as a mobile phone, a tablet computer, an electronic book reader, a multimedia player, a wearable device, a personal computer (PC), and the like. A client of an application (or called application program) may be installed in the terminal 101. In embodiments of the present disclosure, it should be understood that a type of the application is not limited. For example, the application may be a social application, an instant messaging application, an online shopping application, a payment application, a news information application, a video application, and the like.

The client of the application may present different user interfaces to a user, present different information or provide different functions to the user through different user interfaces. In an example, the client is a client of an online shopping application (called an "online shopping application client" for short), and the online shopping application client may provide various functions, such as instant messaging, information reading, online shopping, online payment, file browsing, note sharing, applets, and the like.

The server 102 is configured to provide background service for the client in the terminal 101. For example, the server 102 may be a background server of any of the above clients. The server 102 may be a server, a server cluster consisting of multiple servers, or a cloud computing service center.

The terminal 101 may communicate with the server 102 through a network 103. The network 103 may be a wired network or a wireless network.

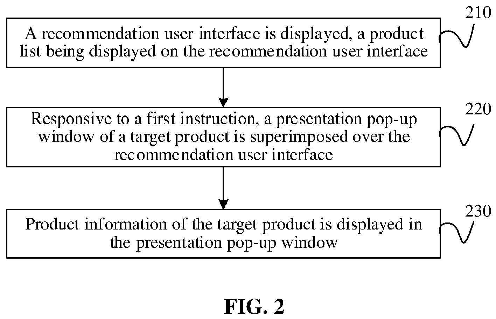

FIG. 2 is a flow chart showing a product browsing method, according to an exemplary embodiment of the present disclosure. The method is applied to a terminal and can include the following steps.

In Step 210, a recommendation user interface is displayed, a product list being displayed on the recommendation user interface. The recommendation user interface is an interface displaying multiple recommended products, and these recommended products are displayed on the recommendation user interface in the form of the product list. Optionally, the recommendation user interface is a home page of a running application or another page to which the page is redirected by an operation of a user. Those are not limited in the present disclosure.

In an example, a layout of the recommendation user interface is a waterfall layout. The user may infinitely pull down (or slide up) the recommendation user interface to acquire a product to be viewed, and the user is not required to click a page turning button to trigger page turning to view more products.

The product list can be a list formed according to list items of the multiple recommended products. Shapes and sizes of the list items may be the same and may also be different. The list item corresponding to a recommended product provides related information of the product, and the related information includes, but is not limited to, picture information, and text information. The text information includes, but is not limited to, product name information, product use information, product price information, product origin information, and product sales information.

In an example, a reading application can be installed in a mobile phone. After the user starts the reading application, a recommendation user interface is displayed on a screen of the mobile phone, multiple electronic books are displayed on the recommendation user interface, and these electronic books are displayed on the recommendation user interface in the form of a product list. In a list item corresponding to each electronic book, both a cover and a title of the electronic book are displayed.

In another example, a shopping application can be installed in a tablet computer. The user, after starting the shopping application, executes a searching operation. After the searching operation is completed, the interface is redirected, and a recommendation user interface is displayed on a screen of the tablet computer. Multiple commodities matched with the searching operation are displayed on the recommendation user interface, and these commodities are displayed on the recommendation user interface in the form of a list. In a list item corresponding to each commodity, a picture of the commodity, the name of the commodity and sales of the commodity are displayed.

In Step 220, responsive to a first instruction, a presentation pop-up window of a target product is superimposed over the recommendation user interface. The first instruction is configured to select the target product in the product list. The first instruction is triggered by a triggering operation of the user over/on the target product. The target product can be a product selected by the user from the products in the product list. The presentation pop-up window is a display region of which a display layer is over the recommendation user interface.

Further, the presentation pop-up window can be draggable. An initial position of the presentation pop-up window is a center of the recommendation user interface. A size of the presentation pop-up window is not greater than a size of the recommendation user interface. In other words, the size of the presentation pop-up window may be smaller than the size of the recommendation user interface, such that part of display content of the recommendation user interface may be covered or blocked. The size of the presentation pop-up window may also be equal to the size of the recommendation user interface, such that all display contents of the recommendation user interface are covered. A shape of the presentation pop-up window includes, but is not limited to, a rectangle, a square and a round. Those are not limited in the present disclosure.

The terminal displays the recommendation user interface and may display the presentation pop-up window in an upper layer of the recommendation user interface. In other words, the display layer of the presentation pop-up window is the upper layer of the recommendation user interface.

In Step 230, product information of the target product is displayed in the presentation pop-up window. The product information of the target product can be displayed in the presentation pop-up window, and the product information includes, but is not limited to, picture information, text information, voice information and video information. The user may further know more about the target product through the presentation pop-up window.

To sum up, according to the method in the embodiments, the recommendation user interface is displayed, and after the first instruction is acquired, the presentation pop-up window of the target product is superimposed over the recommendation user interface for displaying, such that a user may know more about the target product without redirecting to a detail presentation interface of the target product, related operations are reduced, and product browsing efficiency is improved.

In an optional embodiment based on FIG. 2, Step 220 may be implemented as displaying, responsive to the first instruction, a background-masked recommendation user interface (or called a recommendation user interface with dark background), and superimposing the presentation pop-up window of the target product over the background-masked recommendation user interface.

The first instruction is configured to select the target product in the product list.

In an example, the background-masked operation in the step is implemented by achieving a mask effect through JavaScript. A mask has a transparent effect. The recommendation user interface is covered with a layer of model for the purpose of covering the contents of the recommendation user interface below and highlighting the contents displayed in the presentation pop-up window over the mask. A position value of a layer corresponding to the mask is required to be set to be absolute, thereby implementing masking.

After the terminal receives the first instruction, a server of the terminal recompiles a code of the recommendation user interface, thereby displaying the background-masked recommendation user interface on a screen of the terminal. Meanwhile, the presentation pop-up window of the target product is superimposed over the background-masked recommendation user interface.

Optionally, the terminal, if receiving a triggering operation over a presentation pop-up window region, makes a response. The terminal, if receiving a triggering operation over another region in addition to the presentation pop-up window region, in the recommendation user interface, does not make any response.

In an example, the first instruction is triggered by a long-press operation on the target product in the product list. The long-press operation refers to a pressing operation executed by the user on the target product for more than a preset time length. Optionally, the terminal can simulates a long-press event corresponding to the long-press operation in a manner of setting timers in a touchstart (namely finger touch) event and a touchend (namely finger lifting) event.

In an example, a vibration feedback is generated in case of the first instruction being received. The user, after receiving the vibration feedback, may determine that the terminal has received the first instruction, the first instruction being triggered by the long-press operation. The vibration manner and time length of the vibration feedback are not limited in the present disclosure. The terminal can support the vibration feedback through a vibrate application programming interface (API). The vibrate API is a mode allowing a developer to directly call device vibration to implement vibration at a given time by using JavaScript.

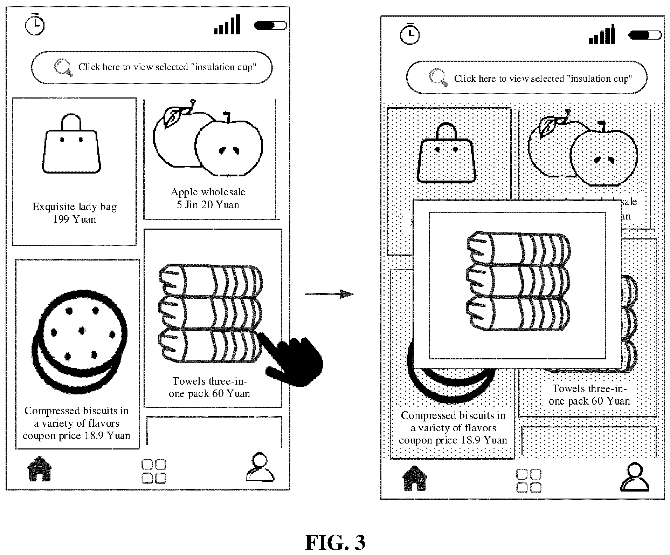

Referring to FIG. 3, a shopping application is installed in a mobile phone. After the user starts the shopping application, a home page is displayed on a screen of the mobile phone, and the home page is a recommendation user interface. Multiple commodities are displayed on the recommendation user interface, and these commodities are displayed on the recommendation user interface in the form of a list. A waterfall layout manner is adopted for/in the recommendation user interface.

In a list item corresponding to each commodity, a picture of the commodity, the name of the commodity and the price of the commodity are displayed. For example, in a list item corresponding to a bag, a picture "handbag" of the commodity, the name "exquisite lady bag" of the commodity and the price "199 Yuan" of the commodity are displayed. In a list item corresponding to an apple, a picture "apple" of the commodity, the name "apple wholesale 5 Jin" of the commodity and the price "20 Yuan" of the commodity are displayed. In a list item corresponding to a biscuit, a picture "biscuit" of the commodity, the name "compressed biscuits in a variety of flavors" of the commodity and the price "coupon price 18.9 Yuan" of the commodity are displayed. In a list item corresponding to a towel, a picture "towel" of the commodity, the name "towels three-in-one pack" of the commodity and the price "60 Yuan" of the commodity are displayed.

The user performs a long-press operation in the list item corresponding to the towel. The mobile phone, after receiving the long-press operation, generates a first instruction. A background-masked recommendation user interface is displayed on the screen of the mobile phone according to the first instruction. Meanwhile, a presentation pop-up window of the towel is superimposed over the background-masked recommendation user interface, and the presentation pop-up window is positioned in the center of the recommendation user interface.

In such case, the interface is not redirected and is still the recommendation user interface. Related information of the towel is presented in the presentation pop-up window.

To sum up, according to the method in the embodiments, the recommendation user interface is displayed, and after the first instruction is acquired, the presentation pop-up window of the target product is superimposed over the recommendation user interface for displaying, such that a user may know more about the target product without redirecting to a detail presentation interface of the target product, related operations are reduced, and product browsing efficiency is improved.

The first instruction is triggered through the long-press operation, and a feedback is given to the user by vibration, such that convenience and accuracy of related operations are improved.

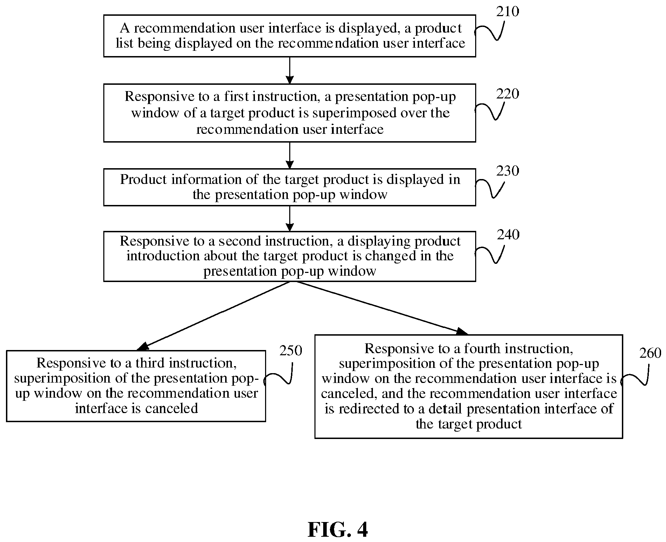

In an embodiment based on FIG. 2, FIG. 4 is a flow chart showing a product browsing method, according to an exemplary embodiment of the present disclosure. In the embodiments, the method further includes Step 240, Step 250 and Step 260.

In Step 240, responsive to a second instruction, a displaying product introduction about the target product is changed in the presentation pop-up window. The second instruction is an instruction for instructing the terminal to change the displaying product introduction about the target product in the presentation pop-up window. The product introduction may be an introduction in the form of a picture, a text, a voice, a video, and the like.

In an example, the operation that the displaying product introduction about the target product is changed in the presentation pop-up window responsive to the second instruction includes that: responsive to the second instruction, different production introduction pictures of the target product are switched for displaying in the presentation pop-up window. In such case, the second instruction is a switching browsing instruction. The number of the product introduction pictures, which may be switched for displaying, of the target product in the presentation pop-up window is not limited in the present disclosure.

In the embodiments of the present disclosure, a triggering operation corresponding to the second instruction is not limited. For example, it may be a touch operation on the presentation pop-up window, such as a single-click operation, a double-click operation, a slide operation, a pressing operation or the like, and may also be a gesture operation.

A principle of the gesture operation is that a terminal event is monitored, a coordinate of a finger is acquired at the beginning of a touchstart (namely finger touch) event, a coordinate of the finger is acquired when a touchmove (namely finger slide) event is triggered, and a slide direction of the gesture operation is determined according to the acquired two coordinates.

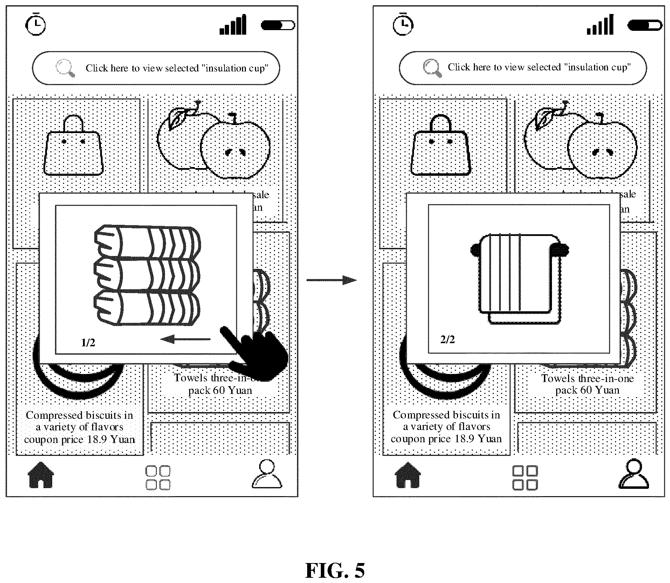

Referring to FIG. 5, FIG. 5 is a schematic diagram illustrating switching different products for displaying in a presentation pop-up window, according to an exemplary embodiment of the present disclosure.

Responsive to the first instruction, the background-masked recommendation user interface is displayed on the screen of the mobile phone. Meanwhile, the presentation pop-up window of the towel is superimposed over the background-masked recommendation user interface, and the presentation pop-up window is positioned in the center of the recommendation user interface. In such case, a main product introduction picture of the towel is displayed in the presentation pop-up window, and is marked as "1/2", which means that two product introduction pictures may be presented in the presentation pop-up window of the towel. The main product introduction picture may be a picture which is the same as or different from a picture of the target product displayed on the recommendation user interface.

The user, if intended to know about more product information, triggers a slide operation over the presentation pop-up window, namely the finger is put in a corresponding display region of the presentation pop-up window and slides leftwards. The terminal responds to the slide operation to generate the corresponding second instruction, and the second instruction is the switching browsing instruction. In such case, another product introduction picture of the towel is displayed in the presentation pop-up window, and is marked as "2/2". The product introduction picture presents a style of a single towel. The user further knows about the style, color and the like of the towel through the picture.

In an example, the operation that the displaying product introduction about the target product is changed in the presentation pop-up window responsive to the second instruction includes that, responsive to the second instruction, a display angle of a panoramic product demonstration model of the target product is changed in the presentation pop-up window. In such case, the second instruction is an omnidirectional browsing instruction, namely the display angle of the panoramic product demonstration model of the target product is controlled to be changed in the presentation pop-up window.

Optionally, based on the triggering operation of the user, the terminal generates the second instruction and displays a panoramic product picture according to the second instruction.

The panoramic product demonstration model is a presentation form of a virtual reality (VR) technology. The VR technology refers to simulating a virtual world of a three-dimensional space by using a computer to provide simulations about senses such as the visual sense and the like for the user to enable the user to timely observe objects in the three-dimensional space without limitations.

Optionally, the panoramic product demonstration model is implemented through WebVR. The WebVR is a JavaScript API, and it is an API providing a function of accessing a VR device, such as oculus rift (VR glasses) and google cardboard (VR glasses). The WebVR may provide a VR experience in a browser.

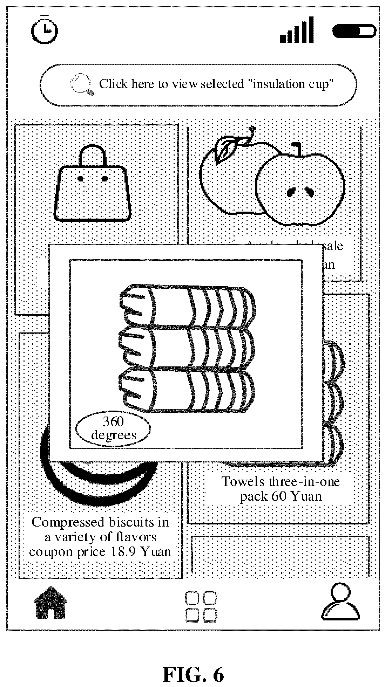

Referring to FIG. 6, the presentation pop-up window of towel is superimposed over the background-masked recommendation user interface, and the presentation pop-up window is positioned in the center of the recommendation user interface. In such case, a static panoramic product demonstration model of the towel is displayed in the presentation pop-up window, and there is a 360-degree identifier in the presentation pop-up window, which means that the panoramic product demonstration model of the towel may be displayed at 360 degrees.

The user, if intended to know about more product information, triggers the slide operation over the presentation pop-up window, namely the finger is put in the corresponding display region of the presentation pop-up window and slides. The terminal responds to the slide operation to generate the corresponding second instruction, and the second instruction is the omnidirectional browsing instruction. In such case, the panoramic product demonstration model, of which the angle keeps changing, of the towel is displayed in the presentation pop-up window, and a changing angle of the panoramic product demonstration model corresponds to a slide angle of the slide operation. The display angle of the panoramic product demonstration model is changed through the triggering operation to display the towel at 360 degrees. The user further knows about the style, color and the like of the towel from different angles through the picture.

In Step 250, responsive to a third instruction, superimposition of the presentation pop-up window on the recommendation user interface is canceled. The third instruction is an instruction for instructing superimposition of the presentation pop-up window on the recommendation user interface to be canceled.

In the embodiments of the present disclosure, a triggering operation corresponding to the third instruction is not limited. For example, it may be a touch operation on the presentation pop-up window, such as a single-click operation, a double-click operation, a slide operation or a pressing operation, and may also be a gesture operation.

Optionally, the triggering operation corresponding to the third instruction is a slide-up operation. The user, if not intended to know about the target product more deeply after browsing the product introduction displayed in the presentation pop-up window, executes the slide-up operation on the presentation pop-up window. The terminal, after receiving the slide-up operation, generates the third instruction to instruct superimposition of the presentation pop-up window on the recommendation user interface to be canceled.

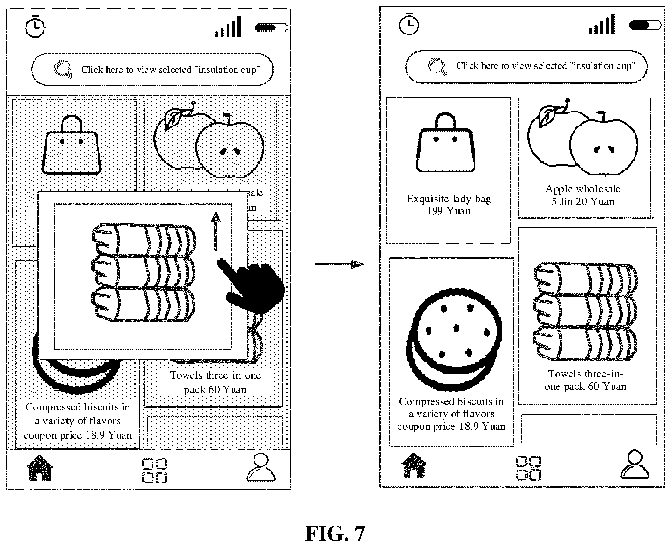

Referring to FIG. 7, responsive to the first instruction, the background-masked recommendation user interface is displayed on the screen of the mobile phone. Meanwhile, the presentation pop-up window of the towel is superimposed over the background-masked recommendation user interface, and the presentation pop-up window is positioned in the center of the recommendation user interface.

Responsive to the second instruction, the terminal presents more product introductions about the towel in the presentation pop-up window. After knowing about the product introduction in the presentation pop-up window, the user is not intended to know about more product information and triggers the slide-up operation over the presentation pop-up window, namely the finger is put in the corresponding display region of the presentation pop-up window and slides upwards. The terminal responds to the slide-up operation to generate the corresponding third instruction. In such case, superimposition of the presentation pop-up window on the recommendation user interface is canceled, and a background of the recommendation user interface is not in a masked state anymore and recovered into a normal display state. Then, the user may continue browsing other products on the recommendation user interface.

In Step 260, responsive to a fourth instruction, superimposition of the presentation pop-up window on the recommendation user interface is canceled, and the recommendation user interface is redirected to a detail presentation interface of the target product.

The fourth instruction is an instruction for instructing the recommendation user interface to be redirected to the detail presentation interface of the target product.

In the embodiments of the present disclosure, a triggering operation corresponding to the fourth instruction is not limited. For example, it may be a touch operation on the presentation pop-up window, such as a single-click operation, a double-click operation, a slide operation or a pressing operation, and may also be a gesture operation.

Optionally, the user, if intended to know about the target product more deeply after browsing the product introduction displayed in the presentation pop-up window, executes the triggering operation on the presentation pop-up window. The terminal, after receiving the triggering operation, generates the fourth instruction to instruct the recommendation user interface to be redirected to the detail presentation interface of the target product.

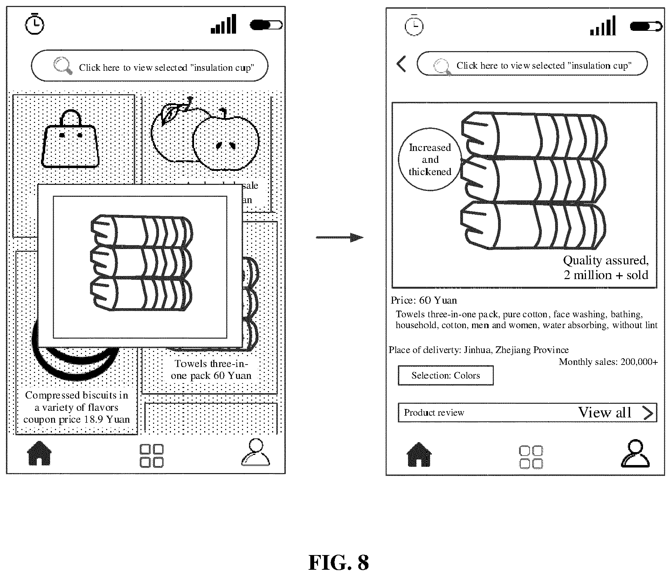

Referring to FIG. 8, responsive to the first instruction, the background-masked recommendation user interface is displayed on the screen of the mobile phone. Meanwhile, the presentation pop-up window of the towel is superimposed over the background-masked recommendation user interface, and the presentation pop-up window is positioned in the center of the recommendation user interface.

Responsive to the second instruction, the terminal presents more product introductions about the towel in the presentation pop-up window, and the user is intended to know about more product information after knowing about the product introduction in the presentation pop-up window and executes the triggering operation on the presentation pop-up window. The terminal responds to the triggering operation to generate the corresponding fourth instruction. In such case, superimposition of the presentation pop-up window on the recommendation user interface is canceled, and the interface of the terminal is redirected from the recommendation user interface to a detail presentation interface of the towel. The user may know more about the target product, i.e., the towel, for example, monthly sales of the towel, shipping origin of the towel and historical comment information of the towel.

To sum up, according to the methods in the embodiments, the recommendation user interface is displayed, and after the first instruction is acquired, the presentation pop-up window of the target product is superimposed over the recommendation user interface for displaying, such that a user may know more about the target product without redirecting to a detail presentation interface of the target product, related operations are reduced, and product browsing efficiency is improved.

Through the second instruction, the terminal displays more product introductions in the presentation pop-up window, and the user knows about more product information. Through the third instruction, the user, when not interested anymore, may rapidly return to the original recommendation user interface. Through the fourth instruction, when the user is interested, the interface may be redirected and the user may further know about the product according to the detail presentation interface. According to the methods, different contents are displayed for different browsing requirements of the user, such that convenience for browsing operations is improved.

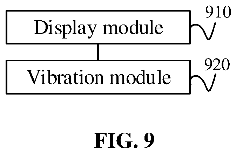

FIG. 9 is a block diagram of a product browsing apparatus, according to an exemplary embodiment of the present disclosure. The apparatus includes a display module 910. The display module 910 is configured to display a recommendation user interface on which a product list is displayed. Further, the display module 910 is configured to, responsive to a first instruction, superimpose a presentation pop-up window of a target product over the recommendation user interface. The display module 910 can be configured to display product information of the target product in the presentation pop-up window.

In an example, the display module 910 is configured to, responsive to the first instruction, display a background-masked recommendation user interface, and the display module 910 is configured to superimpose the presentation pop-up window of the target product over the background-masked recommendation user interface. The first instruction is triggered by a long-press operation on the target product in the product list.

In an example, the apparatus further includes a vibration module 920, and the vibration module 920 is configured to, in case of the first instruction being received, generate a vibration feedback.

The display module 910 can be configured to, responsive to a second instruction, change a displaying product introduction about the target product in the presentation pop-up window. The display module 910 can further be configured to, responsive to the second instruction, switch different product introduction pictures of the target product for displaying in the presentation pop-up window, or the display module 910 is configured to, responsive to the second instruction, change a display angle of a panoramic product demonstration model of the target product in the presentation pop-up window.

In an example, the display module 910 is configured to, responsive to a third instruction, cancel superimposition of the presentation pop-up window on the recommendation user interface. Further, the display module 910 can be configured to, responsive to a fourth instruction, cancel superimposition of the presentation pop-up window on the recommendation user interface and redirect the recommendation user interface to a detail presentation interface of the target product.

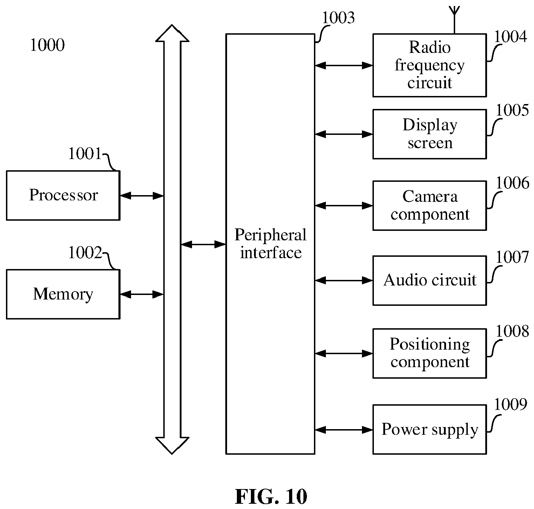

Referring to FIG. 10, a structure block diagram of a terminal 1000 according to an embodiment of the present disclosure is illustrated. The terminal 1000 may be a mobile phone, a tablet computer, a multimedia player, a wearable device, and the like.

The terminal 1000 can include a processor 1001 and a memory 1002. The processor 1001 may include one or more processing cores, for example, a 4-core processor, an 8-core processor, and the like. The processor 1001 may be implemented in at least one hardware form of digital signal processing (DSP), a field programmable gate array (FPGA) or a programmable logic array (PLA). The processor 1001 may also include a main processor and a co-processor, the main processor is a processor configured to process data in an awake state and is also called a central processing unit (CPU), and the co-processor is a low-power-consumption processor configured to process data in a standby state. In some embodiments, the processor 1001 may be integrated with a graphics processing unit (GPU), and the GPU is configured to render and draw a content required to be displayed on a display screen. In some embodiments, the processor 1001 may further include an artificial intelligence (AI) processor, and the AI processor is configured to process calculation operations about machine learning.

The memory 1002 may include one or more computer-readable storage media, and the computer-readable storage medium may be non-transitory. The memory 1002 may further include a high-speed random access memory (RAM) and a non-volatile memory, for example, one or more disk storage devices and flash storage devices. In some embodiments, the non-transitory computer-readable storage medium in the memory 1002 is configured to store at least one instruction, at least one segment of program, a code set or an instruction set. The at least one instruction, the at least one segment of program, the code set or the instruction set is configured to be executed by the processor 1001 to implement any method in the method embodiments of the present disclosure.

In some embodiments, the terminal 1000 optionally further includes a peripheral interface 1003 and at least one peripheral. The processor 1001, the memory 1002 and the peripheral 1003 may be coupled through a bus or a signal line. Each peripheral may be coupled to the peripheral interface 1003 through a bus, a signal line or a circuit board. Specifically, the peripheral includes at least one of a radio frequency circuit 1004, a touch display screen 1005, a camera 1006, an audio circuit 1007, a positioning component 1008 or a power supply 1009.

Of course, those skilled in the art understand know that the structure illustrated in FIG. 10 is not intended to limit the terminal 1000 and may include components more or fewer than those illustrated in the picture, or combine some components, or adopt different component arrangements.

The present disclosure also provides a server, which includes a processor and a memory. At least one instruction is stored in the memory, and the at least one instruction is loaded and executed by the processor to implement the product browsing method in each method embodiment.

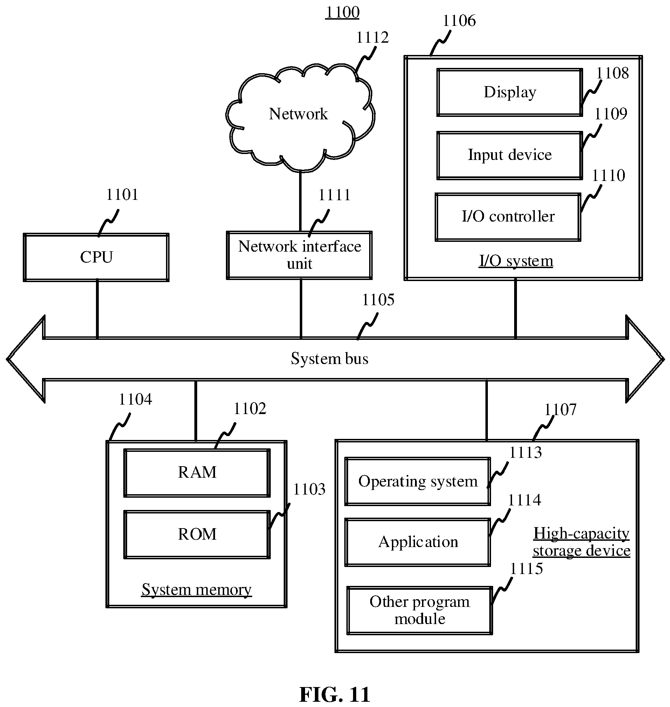

It is to be noted that the server may be a server in FIG. 11. For example, and referring to FIG. 11, a structure diagram of a server according to an exemplary embodiment of the present disclosure is illustrated. Specifically, the server 1100 includes a CPU 1101, a system memory 1104 including a RAM 1102 and a read only memory (ROM) 1103, and a system bus 1105 coupled to the system memory 1004 and the CPU 1101. The server 1100 further includes a basic input/output (I/O) system 1106 assisting in information transmission between each device in a computer and a high-capacity storage device 1107 configured to store an operating system 1113, an application 1114 and other program module 1115.

The basic I/O system 1106 includes a display 1108 configured to display information and an input device 1109, such as a mouse and a keyboard, configured for a user to input the information. Both the display 1108 and the input device 1109 are coupled to the CPU 1101 through an I/O controller 1110 coupled to the system bus 1105. The basic I/O system 1106 may further include the I/O controller 1110 configured to receive and process inputs from the keyboard, the mouse, an electronic stylus or other devices. Similarly, the I/O controller 1110 further provides outputs for a display screen, a printer or an output device of another type.

The high-capacity storage device 1107 is coupled to the CPU 1101 through a high-capacity storage controller (not illustrated) coupled to the system bus 1105. The high-capacity storage device 1107 and a computer-readable storage medium associated therewith provide non-volatile storage for the server 1100. In other words, the high-capacity storage device 1107 may include a computer-readable medium (not illustrated) such as a hard disk or a driver.

In general, the computer-readable medium may include a computer storage medium and a communication medium. The computer storage medium includes volatile and non-volatile and removable and unremovable media configured to store information such as computer-readable instructions, data structures, program modules or other data and implement by any method or technology. The computer storage medium includes a RAM, a ROM, an erasable programmable read only memory (EPROM), an electrically erasable programmable read only memory (EEPROM), a flash memory or another solid-state memory technology, a compact disc ROM, a high-density digital versatile disc (DVD) or another optical memory, a cassette, a magnetic tape, a disk memory or another magnetic storage device. Of course, those skilled in the art may know that the computer storage medium is not limited to the abovementioned types. The system memory 1104 and the high-capacity storage device 1107 may be collectively referred to as memories.

The memory stores one or more programs, the one or more programs are configured to be executed by one or more CPUs 1101, the one or more programs include instructions configured to implement the product browsing method, and the CPU 1101 executes the one or more programs to implement the product browsing method in each method embodiment.

According to each embodiment of the present disclosure, the server 1100 may further be coupled to a remote computer in a network for running through the network such as the Internet. In other words, the server 1100 may be coupled to the network 1112 through a network interface unit 1111 coupled to the system bus 1105, or, may also be coupled to a network of another type or a remote computer system (not illustrated) through the network interface unit 1111.

Those skilled in the art should know that the structure illustrated in FIG. 11 is not intended to limit the server 1100 and may include components more or fewer than those illustrated in the picture, or combine some components or adopt different component arrangements.

An embodiment of the present disclosure also provides a computer-readable storage medium, in which at least one instruction, at least one segment of program, a code set or an instruction set is stored. The at least one instruction, the at least one segment of program, the code set or the instruction set is loaded and executed by a processor to implement the product browsing method.

The present disclosure also provides a computer program product, which runs in a computer to enable the computer to execute the product browsing method in each method embodiment.

Those of ordinary skill in the art should know that all or part of the steps in each method of the embodiments may be completed by instructing related hardware through a program, the program may be stored in a computer-readable storage medium, and the computer-storage medium may be the computer-readable storage medium in the memory of the abovementioned embodiment and may also be an independent computer-readable storage medium not installed in the terminal. The computer-readable storage medium stores at least one instruction, at least one segment of program, a code set or an instruction set, the at least one instruction, the at least one segment of program, the code set or the instruction set being loaded and executed by a processor to implement the product browsing method.

Optionally, the computer-readable storage medium may include a ROM, a RAM, a solid state drive (SSD) or an optical disk, etc. The RAM may include a resistance random access memory (ReRAM) and a dynamic random access memory (DRAM). The sequence number of the embodiments of the present disclosure is only adopted for description and does not represent the superiority-inferiority of the embodiments.

Those of ordinary skill in the art should know that implementation of all or part of the steps of the abovementioned embodiments may be completed through hardware and may also be completed through related hardware instructed by a program. The program may be stored in a computer-readable storage medium. The storage medium may be a ROM, a magnetic disk, an optical disc or the like.

It is to be understood that "multiple" mentioned in the present disclosure refers to two or more than two. "And/or" describes an association relationship of associated objects and represent that three relationships may exist. For example, A and/or B may represent three conditions, i.e., independent existence of A, coexistence of A and B, and independent existence of B. Character "/" usually represents that previous and next associated objects form an "or" relationship.

The above is only the optional embodiment of the present disclosure and not intended to limit the present disclosure. Any modifications, equivalent replacements, improvements and the like made within the spirit and principle of the present disclosure shall fall within the scope of protection of the present disclosure.

## Claims

1. A product browsing method, **characterized in that** the method comprises:
displaying (210) a recommendation user interface on which a product list is displayed;
superimposing (220) a presentation pop-up window of a target product over the recommendation user interface in response to a first instruction; and
displaying (230) product information of the target product in the presentation pop-up window.

2. The method of claim 1, wherein the step of superimposing the presentation pop-up window of the target product over the recommendation user interface in response to the first instruction comprises:
displaying a background-masked recommendation user interface in response to the first instruction; and
superimposing the presentation pop-up window of the target product over the background-masked recommendation user interface.

3. The method of claim 2, wherein the first instruction is triggered by a long-press operation on the target product in the product list.

4. The method of any one of claims 1 to 3, further comprising:
generating a vibration feedback in response to the first instruction being received.

5. The method of any one of claims 1 to 3, further comprising:
changing (240) a displaying product introduction about the target product in the presentation pop-up window in response to a second instruction.

6. The method of claim 5, wherein the step of changing the displaying product introduction about the target product in the presentation pop-up window in response to the second instruction comprises:
switching different product introduction pictures of the target product for displaying in the presentation pop-up window in response to the second instruction; or
changing a display angle of a panoramic product demonstration model of the target product in the presentation pop-up window in response to the second instruction.

7. The method of any one of claims 1 to 6, further comprising:
canceling (250) superimposition of the presentation pop-up window on the recommendation user interface in response to a third instruction.

8. The method of any one of claims 1 to 6, further comprising:
canceling (260) superimposition of the presentation pop-up window on the recommendation user interface and redirecting the recommendation user interface to a detail presentation interface of the target product in response to a fourth instruction.

9. A product browsing apparatus, **characterized in that** the apparatus comprises a display module (910), wherein the display module (910) is configured to
display a recommendation user interface on which a product list is displayed;
superimpose a presentation pop-up window of a target product over the recommendation user interface in response to a first instruction; and
display product information of the target product in the presentation pop-up window.

10. The apparatus of claim 9, wherein the display module (910) is configured to display a background-masked recommendation user interface in response to the first instruction; and
the display module (910) is configured to superimpose the presentation pop-up window of the target product over the background-masked recommendation user interface.

11. The apparatus of any one of claims 9 to 10, wherein the display module (910) is configured to change a displaying product introduction about the target product in the presentation pop-up window in response to a second instruction.

12. The apparatus of claim 11, wherein the display module (910) is configured to switch different product introduction pictures of the target product for displaying in the presentation pop-up window in response to the second instruction; or
the display module (910) is configured to change a display angle of a panoramic product demonstration model of the target product in the presentation pop-up window in response to the second instruction.

13. The apparatus of any one of claims 9 to 12, wherein the display module (910) is configured to cancel superimposition of the presentation pop-up window on the recommendation user interface in response to a third instruction; or
wherein the display module (910) is configured to cancel superimposition of the presentation pop-up window on the recommendation user interface and redirect the recommendation user interface to a detail presentation interface of the target product in response to a fourth instruction.

14. A computer program comprising instructions for executing the actions of a product browsing method according to any one of claims 1 to 8 when said program is executed by a computer.

15. A recording medium readable by a computer and having recorded thereon a computer program comprising instructions for executing the actions of a product browsing method according to any one of claims 1 to 8.
